# EUROPEAN PATENT APPLICATION

(11) **EP 4 466 993 A1**
(43) Date of publication of application: **27.11.2024**
(21) Application number: 24167638.6
(22) Date of filing: 28.03.2024
(51) Int. Cl.: A01M 7/00

(54) **SPRAY SYSTEM WITH CALIBRATION**

(30) Priority: 30.03.2023 US 202318128611
(71) Applicant: Smart Apply, Inc., Indianapolis IN 46214 (US)
(72) Inventor: VANDENBARK, Gary A., Greenfield (US); HILLIGOSS, Michael C., Zionsville (US)
(74) Representative: Isarpatent

(57) **Abstract**

An agricultural spray system may have several nozzles oriented in an airstream. A controller may sense the presence or absence of foliage over many points, then determine which nozzle to activate and for how long. Each nozzle may spray in a fixed direction, and therefore may be assigned a zone for application. A real time calculation may be made to apply product through the nozzle based on the amount of foliage in a nozzle's zone at that instant. In some cases, the amount of material demanded for a nozzle may be higher than that nozzle can deliver, leading to a situation where the demanded duty cycle may be higher than 100% for that nozzle at that time. After passing through a particular field, the duty cycle of the nozzles over the field may be analyzed, and from that analysis, recommended changes to the nozzle sizes, traverse speed, or other factors may be made to increase the coverage and spray efficiency of the spray system.

## Description

### Background

Spray systems are used to apply fertilizer, pesticides, and various chemicals in many agricultural applications. Orchards of fruit or nut trees, vineyards, and many other agricultural plants are grown using sprayed-on applications of material, which is typically liquid.

Many spray systems have air-assisted operation, where a large fan or banks of fans may blow air towards a plant. The air movement helps the applied material move through the plant, and the air movement also drives the applied material through a plant's leaves, foliage, branches, and the like. In many cases, a plant may be quite dense with various leaves, branches, fruit, etc., and the airflow assists in distributing the applied product through the plant.

Spray systems have an unfortunate side effect in that many instances, the applied product may not all land on the plant as intended. For example, sprayed product that misses a plant is wasted material. Further, in many jurisdictions, chemical sprays may be restricted from overuse. For many agricultural growers, the cost of chemical sprays, including fertilizers, pesticides, fungicides, and other chemicals may be a very high percentage of the cost of growing their products.

Spray systems may be driven along rows of plants, often mounted to a tractor or trailer, and sometimes as a special-purpose self-propelled vehicle.

### Summary

An agricultural spray system may have several nozzles oriented in an airstream. A controller may sense the presence or absence of foliage over many points, then determine which nozzle to activate and for how long. Each nozzle may spray in a fixed direction, and therefore may be assigned a zone for application. A real time calculation may be made to apply product through the nozzle based on the amount of foliage in a nozzle's zone at that instant. In some cases, the amount of material demanded for a nozzle may be higher than that nozzle can deliver, leading to a situation where the demanded duty cycle may be higher than 100% for that nozzle at that time. After passing through a particular field, the duty cycle of the nozzles over the field may be analyzed, and from that analysis, recommended changes to the nozzle sizes, traverse speed, or other factors may be made to increase the coverage and spray efficiency of the spray system.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### Brief Description of the Drawings

In the drawings,
FIGURE 1 is a diagram illustration of an embodiment showing a spray system pulled by a tractor in an orchard environment. The illustration is not to scale.
FIGURE 2 is a diagram illustration of an embodiment showing the rear view of an air-assisted spray system with a tree in an orchard environment. The illustration is not to scale.
FIGURE 3 is a diagram illustration of an embodiment showing a network environment showing a spray system and other computer systems that may assist in configuration and data analysis.
FIGURE 4 is a flowchart illustration of an embodiment showing a method for configuring and operating a spray system.
FIGURE 5 is a flowchart illustration of an embodiment showing a method for configuring a spray system using data collected from a previous spray operation.

### Detailed Description

### Automated Spray Systems

An agricultural spray system may use LIDAR, RADAR, or other sensors to measure a plant prior to spraying the plant with a chemical product. In many cases, the spray systems may have fans or other air assisted movement of the chemical product.

Multiple nozzles may be mounted on the spray system, with various nozzles pointed in different directions. Typically, the nozzles may be mounted such that each nozzle may be intended to spray a particular zone or area of a plant. Nozzles mounted upward or high on the spray system may be oriented to spray a top zone of the plant, while nozzles mounted lower down may spray a different zone lower on the plant.

Although some spray systems may not use air-assisted dispersion systems such as fans, those that do may have the nozzles placed in the air stream such that the air stream may carry the chemical product in the direction of the zone assigned for that nozzle. For spray systems that do not have air-assisted operation, the nozzles may be oriented to point to the respective zones assigned to the nozzles.

There may be two main types of sprayers. One type may be a linear sprayer, where nozzles may be placed along a generally straight frame, often equally spaced apart. One version has the frame mounted as a vertical tower that directs spray horizontally into the plants being sprayed. Tower sprayers may be air-assisted or not, and typically have spray nozzles arranged on the vertical tower such that the nozzles spray horizontally. In such sprayers, each nozzle may be directed at a spray zone that may be essentially rectangular across a horizontal area of the plant.

Another version of a linear sprayer may be a horizontal sprayer, where the nozzles may be directed downward to spray plants from the top. Horizontal sprayers may generally not have air-assist, although some may.

Another type of sprayer may be a radial sprayer. A radial sprayer may have nozzles arrayed around a circle, and the nozzles may be directed radially away from a center point. In some cases, radial sprayers may have a large fan to blow air along the radius outward, and the nozzles may be oriented to release chemicals into the air stream.

Radial sprayers have the property where each nozzle may not be directed at zones of the same size. Nozzles that may be directed toward the top of a large nut tree, for example, may be sized much larger than a nozzle directed nearly horizontally on a radial sprayer. The nozzles directed upward may be sized to deliver much more chemical because the zone intended for that nozzle may be a much larger volume than a nozzle closer to the ground.

Linear sprayers may typically be configured such that each nozzle may be similar or even identical. Often, such sprayers may have the nozzles spaced equidistantly across the length of a frame. In some use cases, such as where the shape of the plants in tower sprayers or the configuration of rows of plants in horizontal sprayers, nozzles may be spaced at non-equal intervals, such as where more nozzles may be positioned to spray in areas expected to have dense foliage, for example.

### Spray Nozzle Control

A LIDAR, RADAR, or other sensor may sense the presence/absence of plants in the spraying zone. Other sensors may include laser sensors, density sensors, thermographic sensors, or any other sensing technology. In some cases, multiple sensors may be used on a sensing system.

In many cases, a tractor may be used where a sensor may be mounted on the front of the tractor to sense the plants, and a sprayer may be mounted to the rear of the plants. Such a system may be useful in an air-assisted sprayer as the rear-mounted sprayer may blow air through a plant's foliage, sometimes violently, such that a sensor may not be able to accurately sense the plant.

Such spray systems may traverse through a field at a constant or relatively constant speed. Such systems may operate by measuring plants at one point, performing the calculation of amount of material to be sprayed by each nozzle, then delaying the spray control until the sprayer physically passed the sensed location.

The sensor may generate a three-dimensional representation of the plant matter to be sprayed. A controller may analyze each zone to which a nozzle may be assigned, and the controller may calculate the amount of material to be applied by that particular nozzle to that particular zone based on the amount of plant matter in the zone.

A spray system may use pulse-width modulated control of spray nozzles, or any other control mechanism whereby the amount of material sprayed through the nozzle may be varied under computer control. In a pulse-width modulated control system, a particular nozzle may be turned on and off in milliseconds, thereby allowing a controller to precisely adjust the amount of material delivered at that instant.

For each zone, an amount of chemical material may be calculated to be delivered. As the nozzle passes the zone, a controller may operate the nozzle to deliver that amount of material. In general, the calculation for the amount of material may use the volume of foliage in the zone, the desired amount of chemical material for the volume, and the maximum flow rate of the nozzle. When the maximum flow rate of the nozzle would deliver more than the desired amount of chemical material, the nozzle may be pulsed or otherwise limited to deliver the desired amount.

### Duty Cycle

In some instances, a zone may require more chemical material than can be delivered by a nozzle at the very instance. In such a situation, the nozzle may be operated at its full delivery rate. In such a situation, the duty cycle of the nozzle may be 100%, even if the controller may have calculated that more chemical material would have been appropriate for the zone.

In a situation where the calculated duty cycle may be over 100%, the zone may receive less than the calculated amount of chemical material targeted. Such zones may be under-applied.

For situations where the nozzles may be pulsed or have their delivery reduced from maximum, the controller may be considered to be delivering the desired amount of material. Such a situation would have a duty cycle less than 100%. However, when the controller calculates that the targeted application is more than the full delivery rate, the system may not be able to deliver the targeted application rate for the zone.

The calculation of a duty cycle for a particular nozzle and a particular zone relies on the maximum amount of material that a nozzle might deliver. The amount of material may be limited by an orifice size, flow rate, delivery pressure, or other factor. These physical limitations may be present in any spray system, yet a controller may calculate that a specific zone may require more material than can physically be delivered. In such situations, the spray system may be inadequately configured for the situation.

### Analysis of Duty Cycle

A spray system may be operated in a field and a duty cycle analysis may be performed. The duty cycle analysis may determine whether the spray system and various parameters may be properly configured for the application conditions.

Throughout the growing season, the plants may grow larger and more dense, requiring different spray configurations. As a plant grows, branches may spread causing the measured zones to grow bigger during the spraying operation. Further, plants may fill out with foliage and fruit during the growing cycle. As such, the settings for a sprayer may change during the growing season.

Data may be stored as a sprayer traverses a field. The sensory data may be stored to measure the size and density of plants, and the application parameters of the spraying may be stored as sprays are applied. In many cases, the duty cycle of each nozzle may be logged that corresponds to the measured size and density of the plants.

The data from a spray operation may be presented in a graphical form, such as showing a density plot or 'heat map' of the amount of spray applied to the plants. Such data may also be used to count the number of plants, judge the health of the plants, and other uses.

Situations where the maximum duty cycle of a nozzle may be exceeded may indicate areas where not enough material may be applied. In many cases, small areas where a maximum duty cycle may be exceeded may be tolerated. Such a situation may occur such as when a tree's branch may extend close to the sensor, making the corresponding zone appear to be very large. Such a situation may also occur for a short distance, such that the duty cycle might not be exceeded but for a short period of time.

In contrast, situations where a nozzle's duty cycle may be exceeded for a longer period of time or on a more consistent basis may indicate that a spray parameter may be adjusted.

One solution for an excessive duty cycle may be to operate a sprayer at a slower traverse speed through the field. When a tractor with its sprayer moves slower, more chemical material may be delivered using the same equipment, flow rate, and nozzle size.

Another solution for an excessive duty cycle may be to adjust the orifice size of one or more nozzles. Larger orifice sizes allow more material to flow, and by increasing the orifice size for those nozzles experiencing over 100% duty cycle, a spray system may be better configured.

Further, there may be some nozzles that are far underutilized. In such cases, those nozzles may have their orifices reduced so that they operate with a higher duty cycle. For many spray systems, a duty cycle of less than 1%, 5%, 10%, or some other value may indicate that the nozzle is over-sized and may be reduced.

### Balancing and Configuration of a Spray System

A spray system may be balanced or optimized by configuring each nozzle orifice such that the nozzle can respond to the instantaneous demand for flow based on the shape or density of foliage being sprayed. Nozzles with more than 100% duty cycle may be adjusted to larger orifice sizes, while nozzles with maximum duty cycles that may be very low may be re-sized with smaller orifice sizes.

A spray system's optimal orifice configuration may vary depending on the crop, field, or even the growing point of the season. In many cases, a baseline configuration may be implemented, then changes may be made after analyzing each spray operation.

In such a procedure, a spray operation may be performed, and a post-spray analysis may identify the duty cycle for each nozzle. The duty cycle analysis may find nozzles which have 100% or more duty cycle as candidates for enlarging the orifice size, as well as underutilized nozzles with a very low duty cycle as candidates for decreasing the orifice size.

A balancing and calibration procedure may apply various heuristics, rules of thumb, or other factors for setting orifice size. In a simple example, a particular nozzle may have been called upon to deliver over 100% duty cycle for a short instance. Such a situation may have occurred because a LiDAR sensor may have detected a branch that protruded far away from a tree. Such a situation may be an anomaly and therefore ignored.

In one example of a heuristic for balancing, nozzles that may experience more than 100% duty cycle for a period of time and on multiple occasions may be considered for increasing the orifice size. The factors used in such a heuristic may be developed by the experience of agricultural professionals or engineers that design spray systems, for example.

Some systems may forecast configuration changes based on past seasons. Such changes may follow previous season's data to estimate that as the foliage density and grow occurs during a season that the optimum nozzle sizes may increase, for example, to compensate for the additional amount of material being sprayed.

Forecasted configuration changes may be based on the stage of growth of the crop. Some systems may have a formula, chart, or other pre-defined suggested changes for orifice sizes and other configuration parameters for spray systems based on the seasonal changes of the crops. In some cases, the forecasted configuration changes may include different changes for some nozzles compared to others.

For example, nozzles configured to spray upwards to the tops of very high trees may encounter more difficulty delivering spray material as the trees become more dense during the growing season. During the early part of the season when leaves are small and before growth occurs, such nozzles may be sized with smaller orifices. During the later parts of the season, such nozzles may be sized significantly larger due to the increased foliage density. In such an example, the nozzles designated for the tops of the trees may be increased by a higher percentage than nozzles designated for lower areas.

### Operational Changes for Spray Systems

Other than orifice size balancing, other operational changes may be made in response to duty cycle analysis. Specifically, the traverse speed or the dilution of liquid spray materials may be adjusted to meet a balanced duty cycle.

The traverse speed for a spray system may be constant during application. The speed of the vehicle factors into two elements of a controller's calculation. First, many spray vehicles may be configured with a LiDAR or other sensor at the front of the vehicle and the spray apparatus at the midpoint or rear of the vehicle. The speed of the vehicle may be used to calculate a delay from when the sensor passes a point of application and when the spray apparatus arrives at that point.

Second, the speed of the vehicle may be a parameter for calculating the amount of spray material being applied. For example, a desired amount of spray material may be set as a volume of spray material per volume of foliage. The volume of spray material that can be applied with a given nozzle size may be affected by the speed of the spray apparatus past the plant.

As such, one factor for meeting a desired volume of spray material for a particular plant may be the traverse speed.

In situations where a duty cycle may be exceeded, one variable that may be changed may be the speed that a spraying vehicle traverses a field. In many cases, the vehicle may be set at a relatively constant speed during the spraying operation. However, some controllers may identify areas of exceptionally high density where one or more nozzles may be called upon to deliver at 100% duty cycle or higher, and such a controller may cause the vehicle to slow down such that the duty cycle may not exceed 100% in such an area.

Throughout this specification, like reference numbers signify the same elements throughout the description of the figures.

When elements are referred to as being "connected" or "coupled," the elements can be directly connected or coupled together or one or more intervening elements may also be present. In contrast, when elements are referred to as being "directly connected" or "directly coupled," there are no intervening elements present.

In the specification and claims, references to "a processor" include multiple processors. In some cases, a process that may be performed by "a processor" may be actually performed by multiple processors on the same device or on different devices. For the purposes of this specification and claims, any reference to "a processor" shall include multiple processors, which may be on the same device or different devices, unless expressly specified otherwise.

When elements are referred to as being "connected" or "coupled," the elements can be directly connected or coupled together or one or more intervening elements may also be present. In contrast, when elements are referred to as being "directly connected" or "directly coupled," there are no intervening elements present.

The subject matter may be embodied as devices, systems, methods, and/or computer program products. Accordingly, some or all of the subject matter may be embodied in hardware and/or in software (including firmware, resident software, micro-code, state machines, gate arrays, etc.) Furthermore, the subject matter may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

The computer-usable or computer-readable medium may be, for example but not limited to, an electronic, magnetic, optical, electromagnetic, infrared, or semiconductor system, apparatus, device, or propagation medium. By way of example, and not limitation, computer readable media may comprise computer storage media and communication media.

Computer storage media includes volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can accessed by an instruction execution system. Note that the computer-usable or computer-readable medium could be paper or another suitable medium upon which the program is printed, as the program can be electronically captured, via, for instance, optical scanning of the paper or other medium, then compiled, interpreted, of otherwise processed in a suitable manner, if necessary, and then stored in a computer memory.

When the subject matter is embodied in the general context of computer-executable instructions, the embodiment may comprise program modules, executed by one or more systems, computers, or other devices. Generally, program modules include routines, programs, objects, components, data structures, etc. that perform particular tasks or implement particular abstract data types. Typically, the functionality of the program modules may be combined or distributed as desired in various embodiments.

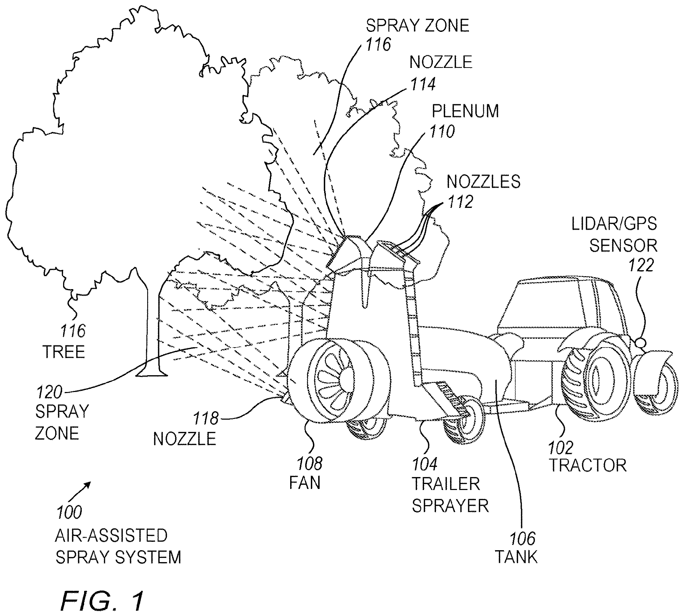

Figure 1 is an illustration showing embodiment 100 of a typical air-assisted spray system used in an orchard. Spray systems such as these are used in many orchards, such as fruit and nut orchards, vineyards, and other agricultural and horticultural applications.

A tractor 102 may pull a trailer mounted sprayer 104. A tank 104 may hold liquid material that may be applied to plants. The liquid may be fungicide, insecticide, fertilizer, or any of a host of chemicals that may be applied throughout the year. Many sprayers use a liquid-based delivery where liquid or solid chemicals may be diluted in water, then applied with the sprayer.

An air-assisted sprayer may have a fan 108 that drives high velocity air through a plenum 110 to create fast moving air that spreads material throughout the tree 116. Various nozzles 112, 114, and 118 may be turned on and off to deliver spray into various spray zones, such as spray zones 116 and 120.

For each of the various nozzles, a nozzle may be directed to a specific spray zone. For example, nozzle 114 may deliver material into spray zone 116, and nozzle 118 may deliver material into spray zone 120. In most air-assisted sprayers, the fan 108 may operate continuously while the individual nozzles may be turned on and off to deliver material when a tree 116 is in the spray zone for the nozzle.

The spray system may use a sensor 122 that may create a two or three dimensional representation of the tree 116. The sensor may be a LiDAR sensor, RADAR sensor, image sensor, thermography sensor, or any other sensor that may capture the presence and shape of the tree 116.

In many instances, the sensor 122 may be located at the front of the tractor 102 so that the sensor 122 may scan the plant foliage before the fan 108 disturbs the plants by blowing the branches and foliage.

The sensor 122 may include a Global Positioning System (GPS) receiver. The GPS receiver may be used in several manners.

The GPS receiver may be used to measure the speed of the tractor 102. The speed may be used to calculate the time to traverse from when the sensor 122 measures the tree 116 and the time when the plenum 110 and various nozzles reach the tree. This delay may be based on the measured speed of the tractor.

The GPS receiver may also be used to log the position of the sensor 122. This information may be used to create various maps showing the field. For example, one map may show a path traversed by the spray system. Such a map may be overlaid with the size/shape/density of the trees that may have been senses. The map may be overlaid with the amount of material dispensed by the sprayer.

In some cases, the map may be overlaid with the duty cycle of one or more nozzles. A duty cycle map may indicate where the spray system applied a proper amount of material, as well as indicate where the duty cycle may have been exceeded. Areas where the duty cycle may have been exceeded may indicate areas where not enough spray material may have been applied.

The sprayer 104 may have a plenum 110 that may create several spray zones, including spray zones that may overlap each other. Overlapping spray zones may be designed to blow up from underneath branches as well as blow across or into the branches from the size. For example, nozzle 118 may create a spray zone 120 that may spray from the bottom, while another nozzle on the vertical part of the plenum 110 may have an overlapping spray zone from the side.

A controller may turn on and off each nozzle in response to the measured density, shape, or other information sensed by the sensor 122. The controller may turn on a nozzle when the corresponding part of the tree 116 may be in a spray zone associated with the nozzle. When two or more nozzles may have overlapping spray zones, the combined effects of both nozzles may be used to deliver spray material to the spray zone of the tree.

In many cases, a spray system may be able to deliver a precise amount of spray material through a nozzle. Many systems may use pulse-width modulated control, where the nozzles may be turned on and off very quickly, allowing precise delivery. Such a controller may deliver spray material only where the plant exists, thereby eliminating overspray and product waste.

Spray materials can be a very expensive component for growers. By minimizing the amount of overspray and delivering precise amounts of spray material directly on the plants, a grower can minimize the cost at the same time ensuring the effective use and delivery of the spray material.

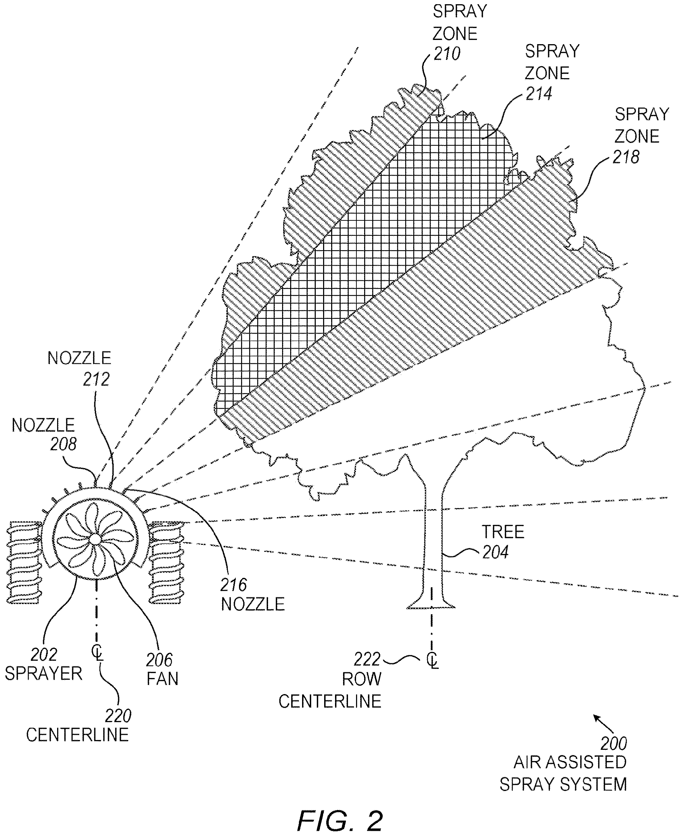

Figure 2 is an illustration of an embodiment 200 showing an air-assisted spray system. The illustration shows a sprayer 202 and tree 204 as the sprayer moves down a row in an orchard.

The sprayer 202 may be an air-assisted sprayer that has a fan 206 which blows high speed air outwardly in a radial direction. Some non-air-assisted sprayers may have a similar geometry, where spray material may be shot out of the various nozzles in a similar direction.

In the example of embodiment 200, the nozzle 208 may deliver material into spray zone 210. Nozzle 212 may deliver material into spray zone 214, and nozzle 216 may deliver material into spray zone 218.

The size of the various spray zones may be sensed by a LiDAR or other sensor. In many cases, the sensor, which may be a single sensor or an array of sensors, may sense the closest branches to the sensor, and such sensors may generate a point cloud, surface, or other representation of the plant. In many cases, the sensor may be located at or near the top of a spray system near the centerline.

The sensed profile of tree 204 may show the profile of the tree from the sensor's vantage point. From the sensed profile, an estimation may be made of the size of the various spray zones that correspond with the various nozzles.

With many sensors, only the closest objects may be sensed. For example, a light based sensor, such as a thermography sensor, LiDAR, video camera, or the like may show the closest branch or part of a plant that is close to the sensor. The sensor may not be able to detect if the plant has a large open or hollow area in the middle, or if the plant is densely foliated. As such, a controller may estimate the size or volume of a spray zone by assuming a depth of the plant.

In order to calculate the volume of a spray zone, a controller may sense the spacing from the centerline 222 of the row of trees from the centerline 220 of the sprayer. The distance between centerlines may be used as an input to estimate the width of the tree and thereby estimate the size or volume of the spray zones.

Based on the size of the spray zones, a controller may calculate a volume or rate of material delivery for each of the various nozzles. The controller may cause a nozzle associated with the spray zone to operate and deliver the calculated volume or rate of delivery.

The amount of time that a nozzle may be opened to deliver the calculated volume of spray material may be the duty cycle of that nozzle at that instant. In some cases, the duty cycle may exceed 100%, indicating that the volume of spray material may be larger than the nozzle may be able to be deliver.

Many spray systems may configure the nozzles based on the size of their intended spray zones. In the example of embodiment 200, the nozzles 212 and 214 may represent the largest spray zones by volume, especially when compared to some of the lower spray zones nearer the ground. As such, the nozzles 212 and 214 may be sized with larger orifices such that the nozzles may deliver larger amounts of spray material when called upon.

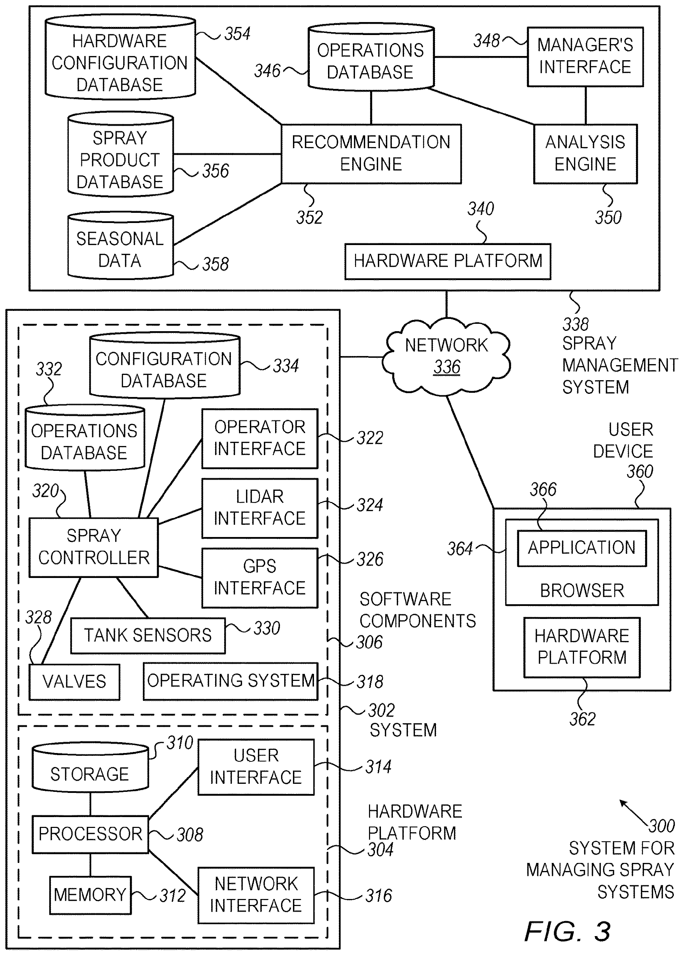

Figure 3 is a diagram of an embodiment 300 showing components that may manage spray systems. The components are illustrated as being connected across a network 336.

The diagram of Figure 3 illustrates functional components of a system. In some cases, the component may be a hardware component, a software component, or a combination of hardware and software. Some of the components may be application level software, while other components may be execution environment level components. In some cases, the connection of one component to another may be a close connection where two or more components are operating on a single hardware platform. In other cases, the connections may be made over network connections spanning long distances. Each embodiment may use different hardware, software, and interconnection architectures to achieve the functions described.

Embodiment 300 illustrates a device 302 that may have a hardware platform 204 and various software components. The device 302 as illustrated represents a conventional computing device, although other embodiments may have different configurations, architectures, or components.

In many embodiments, the device 302 may be a server computer. In some embodiments, the device 302 may still also be a desktop computer, laptop computer, netbook computer, tablet or slate computer, wireless handset, cellular telephone, game console or any other type of computing device. In some embodiments, the device 302 may be implemented on a cluster of computing devices, which may be a group of physical or virtual machines.

The hardware platform 304 may include a processor 308, random access memory 310, and nonvolatile storage 312. The hardware platform 304 may also include a user interface 314 and network interface 316.

The random access memory 310 may be storage that contains data objects and executable code that can be quickly accessed by the processors 308. In many embodiments, the random access memory 310 may have a high-speed bus connecting the memory 310 to the processors 308.

The nonvolatile storage 312 may be storage that persists after the device 302 is shut down. The nonvolatile storage 312 may be any type of storage device, including hard disk, solid state memory devices, magnetic tape, optical storage, or other type of storage. The nonvolatile storage 312 may be read only or read/write capable. In some embodiments, the nonvolatile storage 312 may be cloud based, network storage, or other storage that may be accessed over a network connection.

The user interface 314 may be any type of hardware capable of displaying output and receiving input from a user. In many cases, the output display may be a graphical display monitor, although output devices may include lights and other visual output, audio output, kinetic actuator output, as well as other output devices. Conventional input devices may include keyboards and pointing devices such as a mouse, stylus, trackball, or other pointing device. Other input devices may include various sensors, including biometric input devices, audio and video input devices, and other sensors.

The network interface 316 may be any type of connection to another computer. In many embodiments, the network interface 316 may be a wired Ethernet connection. Other embodiments may include wired or wireless connections over various communication protocols.

The software components 306 may include an operating system 318 on which various software components and services may operate.

A spray controller 320 may function as an on-board controller for a spray system. The system 302 may be mounted on a pull-behind sprayer, mounted in the cab of a tractor, mounted in a self-propelled sprayer, or have some other on-board configuration.

The spray controller 320 may have an operator interface 322 through which an operator may configure the spray system for operation, as well as monitor and adjust spray settings during operation. In some cases, the operator interface 322 may provide feedback about the current or previous spray sessions, including validation and performance monitoring of current or previous spray sessions.

A LiDAR interface 324 may receive input from any type of sensor capable of detecting plants to be treated. In many cases, LiDAR may be used, however other systems may use RADAR, thermography, video, stereo video, or any other type of sensor. In general, such sensors may create a two dimensional or three dimensional map of foliage to be sprayed. As such a sensor traverses through a field, a three dimensional representation of the foliage may be created.

A Global Positioning System (GPS) interface 326 may collect positional data about the spray system. The GPS input may be used to identify the specific location from which the LiDAR or other sensor takes its measurements, and such location information may be used to create a three dimensional map of the plant foliage. The GPS interface 326 may also be used to monitor the traverse speed or velocity of the spray system through a field. The traverse speed or velocity may be used in part to calculate the amount of spray material that may be delivered.

The spray controller 320 may calculate the amount of spray material to be delivered through each of the various nozzles of the spray system. The amount of spray material may generally be calculated based on the amount of foliage in a spray zone multiplied by the spray material to be delivered per unit volume.

The actual formula may vary from one spray system to another and may be a function of the specific geometry of the spray system, the types of plants being treated, the characteristics and intended use of the spray material, and other factors. Such parameters may be stored in a configuration database 334. In many use scenarios, the configuration database 334 may be configured prior to heading out to the field to perform a spray operation. Some systems may use the operator interface 322 for setting parameters in the configuration database 334. Some systems may enable other devices, such as hand held mobile devices, desktop computers, or other devices to set, modify, or monitor various parameters in the configuration database 334.

The spray controller 320 may calculate an amount of spray material to be delivered by a particular nozzle, then may actuate one or more valves 328 to cause the spray material to be delivered. In many cases, the valves 328 may be actuated by pulse-width modulation, such that the valve may be turned on and off in milliseconds. Such a system may allow for precise control of spray material. Other systems may have other mechanisms for controlling the amount of spray material, such as variable orifices or other flow control mechanisms.

The spray controller 320 may receive input from various tank sensors 330. Such tank sensors 330 may detect the amount of spray material in a tank, as well as other parameters such as temperature and the like.

As a spray controller 320 receives input from the LiDAR interface 324 and GPS interface 326, the spray controller 320 may both measure the amount of foliage and calculate an amount of spray material to deliver. Such information may be stored in an operations database 332.

The operations database 332 may include any parameter measured or calculated during operation of the spray system. Such information may be accessed after the spray operation to measure plant growth, count the number of plants in a field, validate spray application, analyze performance of the spray system, and many other operations.

A network 336 may connect the spray system 302 to a spray management system 338. In many implementations, the spray management system 338 may be a remote or cloud-based system that may collect data from many spray operations and allow many operations to be performed on the data. In such operations, a wireless or wired connection may be made between the onboard spray system 302 and the spray management system 338. In other implementations, the operations database 332 of the spray system 302 may be downloaded using a wireless or wired connection onto an intermediate device, which may be subsequently uploaded to a spray management system 338. In still other implementations, a wired or wireless connection may be established between the spray system 302 and the spray management system 338. Such an implementation may be, for example, when the spray management system 338 may be implemented on a laptop, notebook, or other portable computer.

The spray management system 338 may operate on a hardware platform 340. An operations database 346 may collect information from the operations database 332 of the spray system 302. In many cases, the operations database 346 may gather operations information from multiple spray operations, including multiple spray operations on a particular field throughout a one or more growing seasons. Further, the operations database 346 may include spray operations from multiple spray systems, multiple fields, multiple crops, and even from multiple growers.

The operations database 346 may collect historical data that a recommendation engine 352 may be able to use for various use cases.

One use case may be for the recommendation engine 352 to recommend a configuration for a sprayer prior to starting a new spray operation. Such a configuration recommendation may include setting parameters into the configuration database 334 onboard the spray system 302 as well as recommending orifice sizes or other mechanical changes to the spray system 302 hardware.

A recommendation engine 352 may have a hardware configuration database 354 which may define various mechanical and performance specifications for a spray system. One such set of specifications may define the mechanical geometry of the nozzles of the spray system, including their direction, maximum flow rate as defined by an orifice size, the spray area geometry assigned to each nozzle, and the like.

The spray area geometry assigned to each nozzle may be used by the spray controller 320 to detect foliage in the spray area, determine the amount of material to be delivered to the spray area as the spray nozzle passes, and turn on and off or otherwise control the nozzle to deliver the calculated amount of material.

In many cases, a starting spray area geometry may be calculated by the spray system designer, but an operator may be able to adjust the positioning of the nozzles which may change the nozzle's performance or change the spray area.

In many cases, a spray system may be calibrated empirically. One mechanism may be to measure the spray pattern by creating a mechanical frame around the spray system. With a frame in place, the geometry of each spray zone may be observed, and in each spray zone, the amount of material delivered may be measured. Another mechanism may be to apply water-sensitive paper at many locations in plants, then use the spray system to apply spray material to empirically measure the amount of material delivered.

Once the physical geometry of the spray zones and their nozzles may be determined, the geometry may be updated in the hardware configuration database 354.

One operation of the recommendation engine 352 may be to analyze the duty cycle of each nozzle during a spray operation and determine whether changes to the hardware configuration may be made. For example, when a nozzle may be called upon to deliver more than 100% duty cycle, the situation may indicate that the nozzle may be undersized. In such a case, the recommendation engine 352 may suggest changes to one or more nozzle orifice sizes in order to reduce the situations where a nozzle may be unable to deliver the desired flow rate.

The recommendation engine 352 may also be able to predict changes to the flow rate, and therefore changes to the nozzle orifice sizes to meet the desired flow rate for a future spray operation. In many cases, a spray product database 356 may be consulted to determine what spray volume density would be used, as well as viscosity or other flow-related parameters for the anticipated spray operation.

A seasonal database 358 may also be consulted to estimate changes in plant growth, plant density, or other growth-related parameters that might change the calculated amount of spray material to apply.

The recommendation engine 352 may adjust or suggest various parameters for an upcoming spray operation. One output may be to balance nozzle sizes by identifying nozzles that may be over- or under-sized based on previous or anticipated duty cycle. For example, a nozzle orifice size may be increased where that nozzle may be expected to have over 100% duty cycle for an anticipated spray operation. In addition, the recommendation engine 352 may recommend changes to the speed or velocity of the spray system through the field, as slower speeds may increase the delivery rate of spray material per unit volume of plant matter.

The spray management system 338 may include a manager's interface 348 through which various analyses or historical data may be displayed or rendered. Additionally, an analysis engine 350 may be used to analyze historical data from the operations database 346.

In many configurations, a user device 360 may be a device through which a user connects to the spray system 302 or spray management system 338. The user device 360 may operate on a hardware platform, such as a mobile telephone, notebook computer, tablet computer, desktop computer, or any other computing device. A browser 364 may operate on the hardware platform 362 and give access to the spray system 306 or spray management system 338 through an application 366. The application 366 may be hosted in the browser 364 or may be a standalone application operating on the hardware platform 362.

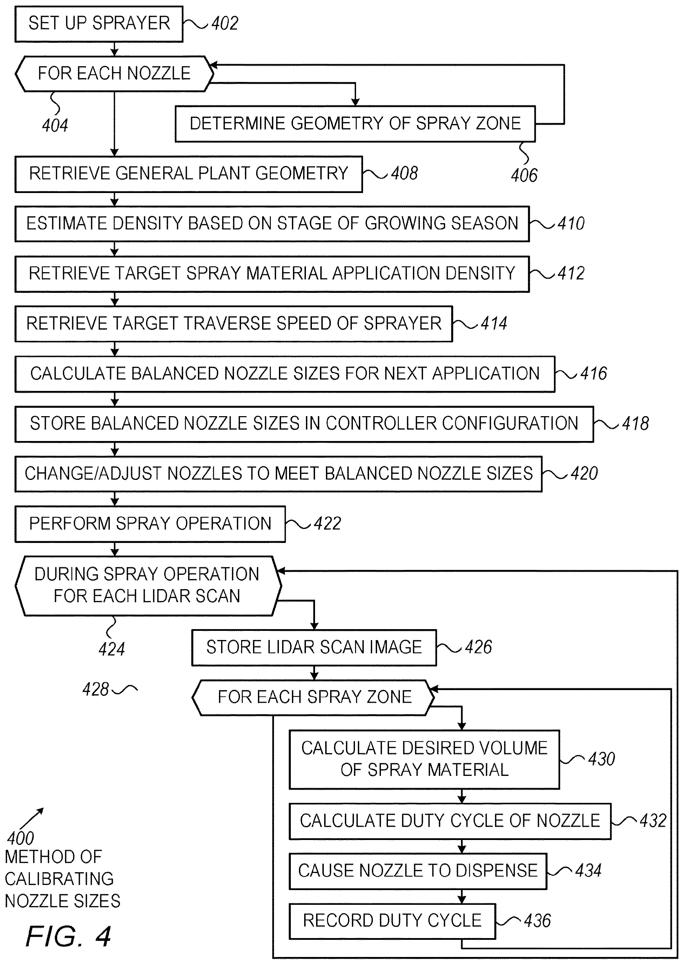

Figure 4 is a flowchart illustration of an embodiment 400 showing a method to configure a spray system for operation. The method of embodiment 400 may be performed prior to executing a spray operation, then as a spray operation is executed, the method may collect data about the operation.

Other embodiments may use different sequencing, additional or fewer steps, and different nomenclature or terminology to accomplish similar functions. In some embodiments, various operations or set of operations may be performed in parallel with other operations, either in a synchronous or asynchronous manner. The steps selected here were chosen to illustrate some principles of operations in a simplified form.

In block 402, the sprayer may be generally configured. In a typical setup phase, the sprayer may be assembled, nozzles oriented in their intended direction, sensors checked, controller initiated and operational, and other basic configuration steps.

For each nozzle in block 404, the geometry of the spray zone may be determined in block 406. The geometry may be the two-dimensional area that a particular nozzle covers. Many spray systems may have several nozzles, each of which may be spaced apart from the other such that each nozzle covers a specific area. In many cases, nozzles overlap, such that adjacent nozzles may cover the same area of a plant.

Some controllers may be configured such that each nozzle may be assigned to a single spray zone, even though there may be overlap between nozzles. Such a simplification may make the analysis of LiDAR or other imaging easier to process. Especially with air-assisted spray systems, fast moving, turbulent air may mix the airflow and spray material through foliage and branches of a plant, thereby depositing spray material in in dense plant material.

The general plant geometry may be received in block 408. The general plant geometry may be a baseline size and shape of the plants being sprayed. Some plants, such as pecan trees, may be 40 or 50 feet tall. Sprayers for pecan trees, therefore, often have very large nozzles pointing upward, as the spray material may have a long distance to travel and may cover a very large spray area.

An estimate of plant density may be made in block 410 based on the stage of growing season. The estimate may include the expected amount of foliage and foliage density through which spray material may be delivered. At the beginning of the growing season before leaves have formed, the density may be very sparse, while at the peak of the growing season, density may be high. As such, nozzles at the peak density may be larger than during the dormant season to effectively deliver the spray product to the plant.

The target spray material density may be retrieved in block 412. The spray material density may be the amount of spray material that is intended to be delivered to the plant. In many cases, this may be expressed in volume of spray material per unit area of plant material, such as amount of spray material per unit area of leaves of the plant.

The target traverse speed or velocity may be retrieved in block 414. The traverse speed or velocity may be a setting on a tractor or self-propelled spray machine that may be relatively constant during the spray operation. Most tractors have a gear and throttle setting that produces a constant speed.

In block 416, a balanced set of nozzle sizes may be calculated. The nozzle sizes may depend on the geometric shape of each nozzle's spray area overlapping or intersecting with the expected geometry of the plant. The material flow rate may be estimated using the traverse speed coupled with the expected density of plant matter and the target spray material density. From this analysis, a nozzle orifice size may be calculated for each of the various nozzles on a spray system.

The calculated nozzle sizes may be stored in a controller database in block 418 as the nozzle configuration. Further, the nozzles may be mechanically changed or adjusted in block 420.

A spray operation may be performed in block 422 using the nozzle configuration.

During the spray operation in block 424, a LiDAR or other imaging scan may be made of the plants. The scanned image may be stored in block 426.

For each spray zone in block 428, the desired amount of spray material may be calculated based in the image received in block 430. A duty cycle of the nozzle may be determined in block 432, and the nozzle may be caused to dispense the spray material in block 434. The duty cycle may be recorded in block 436.

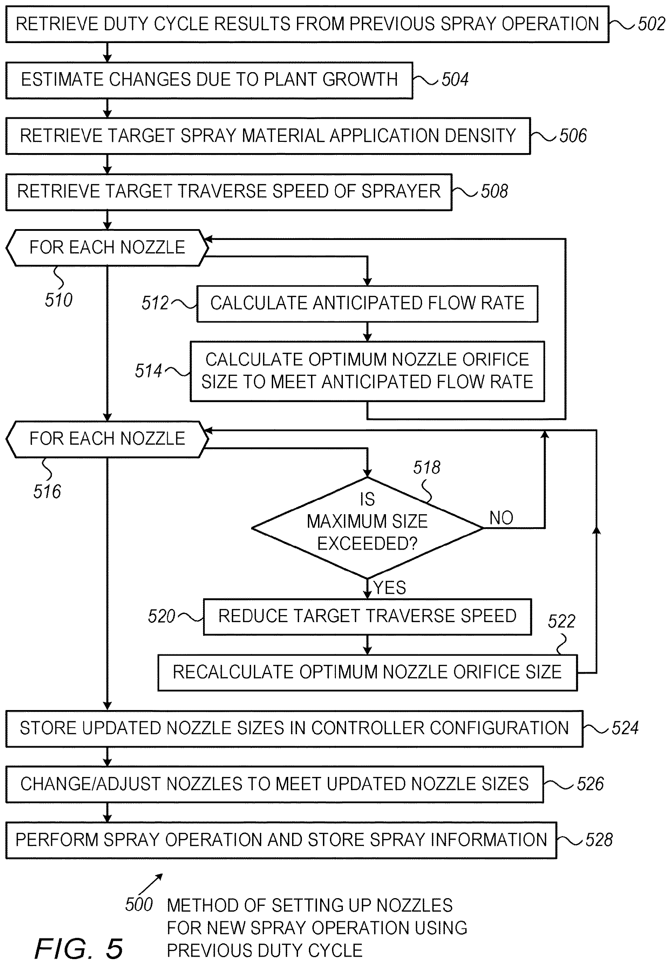

Figure 5 is a flowchart illustration of an embodiment 500 showing a method to configure a spray system for operation based on results from a previous spray operation. The method of embodiment 500 may be performed prior to executing a second or subsequent spray operation.

Other embodiments may use different sequencing, additional or fewer steps, and different nomenclature or terminology to accomplish similar functions. In some embodiments, various operations or set of operations may be performed in parallel with other operations, either in a synchronous or asynchronous manner. The steps selected here were chosen to illustrate some principles of operations in a simplified form.

In block 502, the results of a previous spray operation may be retrieved. The results may include duty cycle information of each nozzle from the previous spray operation.

An estimate may be made in block 504 for any changes in plant density due to the growing season. A target spray material application density may be retrieved in block 506, as well as the target traverse speed of the sprayer in block 508.

For each nozzle in block 510, the anticipated maximum flow rate for that nozzle may be estimated in block 512. The anticipated maximum flow rate may be estimated by determining the duty cycle of the previous spray operation, then factoring changes in spray material as well as the growth of the plants since the last spray operation. An optimum spray nozzle orifice size may be calculated in block 514 to meet the next spray operation.

For each nozzle in block 516, if the maximum nozzle orifice size is not exceeded in block 518, the sequence may return to block 516.

If the maximum size of the nozzle orifice is exceeded in block 518, the traverse speed may be reduced in block 520 and the optimum nozzle orifice sizes for all the nozzles may be recalculated in block 522. In many cases, if a nozzle of a spray system cannot deliver the desired flow rate or material delivery density, the speed of the spray system may be reduced to the point where that nozzle may be able to deliver the desired amount of spray material.

The updated nozzle sizes may be stored in the controller configuration database in block 524, and the corresponding nozzle sizes may be changed in block 526. The spray operation may be performed in block 528 and the spray information recorded as in embodiment 400.

The foregoing description of the subject matter has been presented for purposes of illustration and description. It is not intended to be exhaustive or to limit the subject matter to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments except insofar as limited by the prior art.

## Claims

1. A calibration system for an agricultural spray system, said agricultural spray system having a plurality of spray nozzles configured to deliver spray material within an airstream to agricultural plants, said spray nozzles being controlled by pulse-width modulation, said calibration system comprising:
a LIDAR sensor configured to sense said agricultural plants and generate a LIDAR output signal; and
a processor, said processor configured to:
determine an approximate plant density for a first location based on said LIDAR output signal;
determine a desired spray density for said agricultural plants and said spray material;
calculate a target spray rate for said spray material based at least in part on said approximate plant density and said desired spray density;
determine a duty cycle for a first spray nozzle of the plurality of spray nozzles based on said target spray rate;
determine a maximum duty cycle for each location within a spray boundary for said first spray nozzle; and
calculate an updated target spray rate based on a predetermined maximum duty cycle for said first spray nozzle and said maximum duty cycle.

2. The calibration system of claim 1, said updated target spray rate being used to spray said agricultural plants using said agricultural spray system.

3. The calibration system of claim 1 or 2, a first updated target spray rate being calculated for a first boundary of said agricultural plants and a second updated target spray rate being calculated for a second boundary of said agricultural plants.

4. The calibration system of claim 1 or 2, a first updated target spray rate being calculated for a first time during a growing season, and a second updated target spray rate being calculated for a second time during said growing season.

5. The calibration system of claim 4, said processor being further configured to:
determine an expected change of said updated target spray rate between said first time and said second time during said growing season; and
comparing said expected change of said updated target spray rate to said first updated target spray rate and said second updated target spray rate to determine an agricultural growing statistic.

6. The calibration system of any one of the preceding claims, said target spray rate being determined at least in part based on a traverse speed of said agricultural spray system.

7. The calibration system of claim 6:
said maximum duty cycle being determined at a first traverse speed; and
said updated target spray rate comprising a calculation of a second traverse speed to achieve said predetermined maximum duty cycle.

8. The calibration system of any one of the preceding claims, said approximate plant density being calculated using a nearest object detected by said LIDAR sensor.

9. The calibration system of claim 8, said approximate plant density being additionally calculated using a maximum distance of said agricultural plants.

10. The calibration system of claim 9, said maximum distance being a predetermined nominal distance of a row of said agricultural plants from said agricultural spray system.

11. The calibration system of claim 10, said maximum distance being based in part on LIDAR measurements of said agricultural plants taken from an opposite side of said agricultural plants.

12. The calibration system of any one of the preceding claims, said approximate plant density being calculated for each of a plurality of locations corresponding to locations reached by each of said plurality of spray nozzles.

13. The calibration system of claim 12, said maximum duty cycle being determined for each of said plurality of locations for each of said plurality of spray nozzles.

14. The calibration system of claim 13, said processor further configured to:
calculate a new nozzle size for at least one of said plurality of spray nozzles; and
display said new nozzle size.
